# EUROPEAN PATENT APPLICATION

(11) **EP 4 567 953 A1**
(43) Date of publication of application: **11.06.2025**
(21) Application number: 24205961.6
(22) Date of filing: 10.10.2024
(51) Int. Cl.: H01M 10/0562

(54) **COMPOSITE SOLID ELECTROLYTE AND METHOD OF MANUFACTURING THE SAME**

(30) Priority: 12.10.2023 TW 112139024
(71) Applicant: Hon Hai Precision Industry Co., Ltd., 236038 New Taipei City (TW); SolidEdge Solution Inc., 300094 Hsinchu City (TW)
(72) Inventor: LI, Yu-Han, 300094 Hsinchu City (TW); LAI, Hong-Zheng, 300094 Hsinchu City (TW); CHANG, Tseng-Lung, 300094 Hsinchu City (TW)
(74) Representative: Mewburn Ellis LLP

(57) **Abstract**

The present disclosure provides a composite solid electrolyte. The composite solid electrolyte includes a lithium lanthanum zirconium oxide particle and a protective layer containing lithium phosphate. An average particle size of the lithium lanthanum zirconium oxide particle is smaller than 500 nm and larger than 50 nm. The protective layer containing lithium phosphate covers an outer surface of the lithium lanthanum zirconium oxide particle.

## Description

### BACKGROUND

### Field of Invention

The present disclosure relates to a composite solid electrolyte and a method of manufacturing the same.

### Description of Related Art

Conventional liquid electrolytes have many disadvantages. For example, the liquid is volatilized easily and prone to leak, and so on. When used at high temperatures, the liquid electrolyte, due to its instability, is also prone to undergo an unexpected change, such as an explosion. Solid electrolytes, on the other hand, have higher stability (e.g., higher thermal, electrochemical, and mechanical stabilities, etc.) than liquid electrolytes. Therefore, more and more areas use solid electrolytes to replace liquid electrolytes, for example, the areas in electric vehicles and energy storage with a higher demand for safety requirements. However, the solid electrolyte may have a higher electrical resistance, making the solid electrolyte used in the battery have poor ion conductivity. Therefore, it is necessary to develop a composite solid electrolyte and a method of manufacturing the same to not only solve the problem of the liquid electrolyte but also significantly reduce the electrical resistance and not damage the performance of the composite solid electrolyte during the manufacturing process.

### SUMMARY

The present disclosure provides a composite solid electrolyte, including a lithium lanthanum zirconium oxide particle and a protective layer containing lithium phosphate. An average particle size of the lithium lanthanum zirconium oxide particle is smaller than 500 nm and larger than 50 nm. The protective layer containing lithium phosphate covers an outer surface of the lithium lanthanum zirconium oxide particle.

In some embodiments, the lithium lanthanum zirconium oxide particle is covalently bonded with lithium phosphate in the protective layer containing lithium phosphate.

In some embodiments, a weight ratio between the lithium lanthanum zirconium oxide particle and lithium phosphate in the protective layer containing lithium phosphate is from 2:1 to 3:1.

In some embodiments, a content of lithium carbonate in the protective layer containing lithium phosphate is substantially equal to 0.

In some embodiments, the lithium lanthanum zirconium oxide particle includes LiₓLa₃Zr_{y}O₁₂, x is from 3 to 3.75. and y is from 0 to 2.

In some embodiments, a thickness of the protective layer containing lithium phosphate is from 30 nm to 45 nm.

In some embodiments, the composite solid electrolyte further includes a fluorine-containing colloid. The fluorine-containing colloid includes a fluorine-containing polyolefin, and the lithium lanthanum zirconium oxide particle covered with the protective layer containing lithium phosphate is distributed in the fluorine-containing colloid.

In some embodiments, a viscosity of the fluorine-containing colloid is from 1000 cps to 5000 cps.

In some embodiments, the fluorine-containing polyolefin includes polyvinylidene difluoride.

In some embodiments, a weight ratio between the lithium lanthanum zirconium oxide particle and the fluorine-containing polyolefin is from 30% to 50%.

The present disclosure yet also provides a method of manufacturing the composite solid electrolyte. The method includes the following operations. A lithium lanthanum zirconium oxide is ground to form a lithium lanthanum zirconium oxide particle. The lithium lanthanum zirconium oxide particle is mixed with phosphoric acid to form a protective layer containing lithium phosphate covering an outer surface of the lithium lanthanum zirconium oxide particle by an acid-base reaction.

In some embodiments, an average particle size of the lithium lanthanum zirconium oxide particle is smaller than 500 nm.

In some embodiments, mixing the lithium lanthanum zirconium oxide particle with the phosphoric acid is performed directly after grinding the lithium lanthanum zirconium oxide to form the lithium lanthanum zirconium oxide particle.

In some embodiments, the acid-base reaction includes reacting the phosphoric acid with lithium carbonate on the outer surface of the lithium lanthanum zirconium oxide particle.

In some embodiments, a reaction endpoint of the acid-base reaction is when pH is from 4.5 to 6.

In some embodiments, when mixing the lithium lanthanum zirconium oxide particle with the phosphoric acid, a weight ratio between the lithium lanthanum zirconium oxide particle and the phosphoric acid is from 0.5:1 to 10:1.

In some embodiments, grinding the lithium lanthanum zirconium oxide includes wet grinding the lithium lanthanum zirconium oxide in an organic polar solvent.

In some embodiments, grinding the lithium lanthanum zirconium oxide includes using a bead mill machine to perform grinding with a rotational speed from 2000 rpm to 4000 rpm.

In some embodiments, mixing the lithium lanthanum zirconium oxide particle with the phosphoric acid includes using a bead mill machine to perform mixing with a rotational speed from 100 rpm to 2000 rpm.

In some embodiments, the method further includes mixing the lithium lanthanum zirconium oxide particle covered with the protective layer containing lithium phosphate with a fluorine-containing colloid, in which the fluorine-containing colloid includes a fluorine-containing polyolefin.

### BRIEF DESCRIPTION OF THE DRAWINGS

Fig. 1 is a flowchart of a method of manufacturing a composite solid electrolyte according to some embodiments of the present disclosure.
Fig. 2 is a comparative diagram of the Raman spectra according to some embodiments and some comparative embodiments of the present disclosure.
Fig. 3 is a comparative table of the viscosity of the composite solid electrolyte changing with the rotational speed of the spindle of the rheometer according to some embodiments and some comparative embodiments of the present disclosure.
Figs. 4A and 4B are comparative diagrams of the optical microscopic images, according to some embodiments of the present disclosure and some comparative embodiments of the present disclosure, respectively.

### DETAILED DESCRIPTION

The present disclosure provides a composite solid electrolyte. The composite solid electrolyte includes a lithium lanthanum zirconium oxide particle and a protective layer containing lithium phosphate. An average particle size of the lithium lanthanum zirconium oxide particle is smaller than 500 nm. The protective layer containing lithium phosphate covers an outer surface of the lithium lanthanum zirconium oxide particle. The composite solid electrolyte of the present disclosure has excellent performance (for example, high ion conductivity, high mechanical strength, high stability, low electrical resistance, etc.) and does not deteriorate after long-term use (hence, improving the cycle numbers of charging and discharging in the battery, etc.). Next, the aforementioned composite solid electrolyte is described in detail according to the embodiments.

Firstly, the lithium lanthanum zirconium oxide particle is described. The particle-typed lithium lanthanum zirconium oxide particle improves the performance of lithium lanthanum zirconium oxide particle by increasing the surface area. The particle-typed lithium lanthanum zirconium oxide particle also makes the protective layer containing lithium phosphate described in the following cover on the surface of the lithium lanthanum zirconium oxide particle more easily and completely to provide the protection toward the lithium lanthanum zirconium oxide particle. In some embodiments, the average particle size or average diameter of the lithium lanthanum zirconium oxide particle is preferably smaller than 500 nm, for example, smaller than 500 nm, smaller than 250 nm, smaller than 100 nm, etc. In some embodiments, the average particle size or average diameter of the lithium lanthanum zirconium oxide particle is preferably larger than 50 nm.

Continue to describe the lithium lanthanum zirconium oxide particle. In some embodiments, the lithium lanthanum zirconium oxide particle includes LiₓLa₃Zr_{y}O₁₂, in which x is from 3 to 7.5, y is from 0 to 2, and Li₇La₃Zr₂O₁₂ is preferable. The lithium lanthanum zirconium oxide particle has a good crystal phase and the crystal phase has high purity to improve the performance including the ion conductivity, the mechanical strength, the stability, etc. In some embodiments, the crystal structure of the lithium lanthanum zirconium oxide particle substantially belongs to a cubic system. In some embodiments, the crystal structure of the lithium lanthanum zirconium oxide particle is substantially garnet-typed.

Next, the protective layer containing lithium phosphate is described. The protective layer containing lithium phosphate covers the outer surface of the lithium lanthanum zirconium oxide particle to protect the lithium lanthanum zirconium oxide particle in the inner layer by the lithium phosphate component in the protective layer containing lithium phosphate. In detail, the protective layer containing lithium phosphate substantially separates the lithium lanthanum zirconium oxide particle from water vapor and carbon dioxide in the air. Therefore, the adsorption of the impurities and/or the formation of the impurities on the surface of the lithium lanthanum zirconium oxide particle exposed to the air are avoided, which therefore avoids affecting the performance of the lithium lanthanum zirconium oxide particle. For example, water vapor and carbon dioxide in the air may form lithium hydroxide, lithium carbonate, and so on on the surface of the lithium lanthanum zirconium oxide particle to increase the surface electrical resistance of the lithium lanthanum zirconium oxide particle, which reduces the cycle numbers of using the composite solid electrolyte. In addition to protecting and stabilizing the lithium lanthanum zirconium oxide particle, the protective layer containing lithium phosphate also has the effect of improving the performance of the composite solid electrolyte owing to its lithium phosphate, for example, by improving the wettability of the lithium lanthanum zirconium oxide particle to improve the ion conductivity and therefore to reduce the electrical resistance on the surface of the lithium lanthanum zirconium oxide particle. In some embodiments, the protective layer containing lithium phosphate (and the lithium phosphate therein) uniformly covers the surface of the lithium lanthanum zirconium oxide particle to provide better protection and stability and improve performance. In some embodiments, the protective layer containing lithium phosphate (and the lithium phosphate therein) completely covers the entire surface of the lithium lanthanum zirconium oxide particle to provide better protection and stability and improve performance. In some embodiments, the thickness of the protective layer containing lithium phosphate (and the lithium phosphate therein) is preferably from 30 nm to 45 nm, for example, 30 nm, 33 nm, 37 nm, 42 nm, 45 nm, etc. In some embodiments, the lithium lanthanum zirconium oxide particle and the lithium phosphate in the protective layer containing lithium phosphate are linked by covalent bonding. In some embodiments, the weight ratio of the lithium lanthanum zirconium oxide particle and the lithium phosphate in the protective layer containing lithium phosphate is preferably from 2:1 to 3:1, for example, 2:1, 2.2:1, 2.4:1, 2.6:1, 2.8:1, 3:1, etc. In some embodiments, the content of lithium carbonate in the protective layer containing lithium phosphate is substantially equal to 0 to effectively suppress the negative effects of the lithium carbonate. In some embodiments, the pH value of the protective layer containing lithium phosphate is preferably from 4.5 to 6, for example, 4.5, 5, 5.5, 6, etc., to have a sufficiently high content of lithium phosphate and a sufficiently low content of lithium carbonate.

The present disclosure also provides a composite solid electrolyte. The composite solid electrolyte includes a lithium lanthanum zirconium oxide nanoparticle, a protective layer containing lithium phosphate, and a fluorine-containing colloid. The protective layer containing lithium phosphate covers an outer surface of the lithium lanthanum zirconium oxide nanoparticle. The fluorine-containing colloid includes a fluorine-containing polyolefin, and the lithium lanthanum zirconium oxide nanoparticle covered with the protective layer containing lithium phosphate is distributed in the fluorine-containing colloid. The composite solid electrolyte of the present disclosure has good performance (e.g., high ion conductivity, high mechanical strength, high stability, low electrical resistance, etc.) and does not deteriorate after a long-term use (hence, improving the cycle numbers of charging and discharging in the battery, etc.), as described above. The composite solid electrolyte further improves the performance by distributing the lithium lanthanum zirconium oxide nanoparticle covered with the protective layer containing lithium phosphate in the fluorine-containing colloid. Next, the aforementioned composite solid electrolyte is described in detail according to the embodiments.

Firstly, the lithium lanthanum zirconium oxide nanoparticle and the protective layer containing lithium phosphate are described. The lithium lanthanum zirconium oxide nanoparticle and the protective layer containing lithium phosphate are substantially the same as the lithium lanthanum zirconium oxide particle and the protective layer containing lithium phosphate described above, so the details can be referred to above and will not be repeated herein. In addition, the lithium phosphate in the protective layer containing lithium phosphate has the effect of improving the performance of the fluorine-containing colloid described below. In detail, the lithium phosphate in the protective layer containing lithium phosphate can inhibit the defluorination reaction of the fluorine-containing polyolefin in the fluorine-containing colloid, so the deterioration of the fluorine-containing polyolefin is inhibited to avoid increasing the viscosity of the fluorine-containing colloid, which therefore makes the implementation of the subsequent processes become harder, for example, a difficulty in coating, an increasing of process temperature owing to the difficulty in coating, and so on.

Next, the fluorine-containing colloid is described. The fluorine-containing colloid improves the wettability of the lithium lanthanum zirconium oxide nanoparticle covered with the protective layer containing lithium phosphate, thereby reducing the electrical resistance. In addition, the fluorine-containing colloid can also improve adhesion and flexibility because of the polymer property of the fluorine-containing polyolefin contained in the fluorine-containing colloid, so the fluorine-containing colloid adheres well to, for example, the electrodes, etc., and is suitable for being applied in the flexible batteries. In some embodiments, the viscosity of the fluorine-containing colloid is preferably from 1000 cps (or cP) to 5000 cps, for example, 1000 cps, 2000 cps, 3000 cps, 4000 cps, 5000 cps, etc., to avoid excessive adhesion causing a difficult application in the subsequent process and to avoid too low adhesion resulting in poor adhesion or flexibility. In some embodiments, the weight average molecular weight of the fluorine-containing polyolefin is preferably from 400000 Da to 2000000 Da, for example, 400000 Da, 800000 Da, 1200000 Da, 1600000 Da, 2000000 Da, etc. In some embodiments, the preferable fluorine-containing polyolefin includes polyvinylidene difluoride. In some embodiments, the weight ratio of the lithium lanthanum zirconium oxide nanoparticle and the fluorine-containing polyolefin is preferably from 30% to 50%, for example, 30%, 35%, 40%, 45%, 50%, etc.

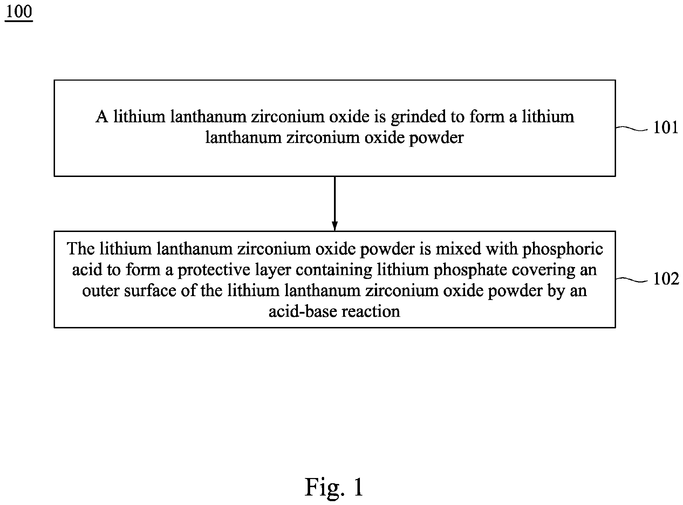

The present disclosure also provides a method of manufacturing the composite solid electrolyte described above. The Method includes the following operations. A lithium lanthanum zirconium oxide is ground to form a lithium lanthanum zirconium oxide particle. The lithium lanthanum zirconium oxide particle is mixed with phosphoric acid to form a protective layer containing lithium phosphate by an acid-base reaction to cover an outer surface of the lithium lanthanum zirconium oxide particle. The composite solid electrolyte manufactured by the method of the present disclosure has good performance (for example, high ion conductivity, high mechanical strength, high stability, low electrical resistance, etc.) and does not deteriorate after lone-term use (hence, increasing the cycle numbers of charging and discharging in the battery, etc.), as described above. The method also avoids damaging the crystal phase of the particle, effectively modifies the surface of the particle, and simplifies and fastens the process. Next, the aforementioned method 100, referring to Fig. 1, is described in detail according to the embodiments.

In the operation 101 of the method 100 in Fig. 1, the lithium lanthanum zirconium oxide is ground to form the lithium lanthanum zirconium oxide particle. The lithium lanthanum zirconium oxide is substantially the same as the lithium lanthanum zirconium oxide particle and the lithium lanthanum zirconium oxide nanoparticle described above, except that the size may be larger, but will become smaller than 500 nm, as described above, after the completion of operation 101. In some embodiments, grinding the lithium lanthanum zirconium oxide includes wet grinding the lithium lanthanum zirconium oxide in an organic polar solvent. In some embodiments, the organic polar solvent includes N,N-dimethylacetamide, ethanol, isopropanol, or combinations thereof. In some embodiments, grinding the lithium lanthanum zirconium oxide is performed by using a bead mill machine. In some embodiments, the cylinder container of the bead mill machine includes the lithium lanthanum zirconium oxide, the organic polar solvent, the agitator, and the grinding beads inside the cylinder container, in which the agitator drives the grinding beads to rotate during the stirring process, and the lithium lanthanum zirconium oxide disperses uniformly and reduces size by the friction and impact force between the grinding beads and the lithium lanthanum zirconium oxide. In some embodiments, the rotational speed of the bead mill machine is from 2000 rpm to 4000 rpm, for example, 2000 rpm, 2500 rpm, 3000 rpm, 3500 rpm, 4000 rpm, etc. In some embodiments, the temperature to perform the operation 101 is at room temperature, for example, from 20 °C to 30 °C, such as 20 °C, 22 °C, 24 °C, 26 °C, 28 °C, 30 °C, etc. In some embodiments, the operation 101 is performed until the lithium lanthanum zirconium oxide is ground to form the lithium lanthanum zirconium oxide particle with the average particle size or average diameter smaller than 500 nm.

In the operation 102 of the method 100 in Fig. 1, the lithium lanthanum zirconium oxide particle and phosphoric acid are mixed to form the protective layer containing lithium phosphate covering the outer surface of the lithium lanthanum zirconium oxide particle by an acid-base reaction. In some embodiments, the acid-base reaction includes reacting phosphoric acid with lithium carbonate that may form on the surface of the lithium lanthanum zirconium oxide particle to form the protective layer containing lithium phosphate that can include the lithium phosphate on the surface of the lithium lanthanum zirconium oxide particle. By using the acid-base reaction, the protective layer containing lithium phosphate is formed on the surface of the lithium lanthanum zirconium oxide particle, and the damage to the crystal phase of the lithium lanthanum zirconium oxide particle is also avoided by avoiding dissolving the lithium lanthanum zirconium oxide particle in water to remove the lithium carbonate on the surface of the lithium lanthanum zirconium oxide particle. In addition, compared with using grinding and polishing methods, the conversion of lithium carbonate to lithium phosphate by the acid-base reaction removes the lithium carbonate on the particle more comprehensively, thereby further forming the effective protective layer containing lithium phosphate. In some embodiments, the concentration of phosphoric acid is preferably larger than or equal to 85 wt%, larger than or equal to 90 wt%, or larger than or equal to 95 wt%, to be sufficient for carrying on the acid-base reaction and to reduce the possible damage of water to the crystal phase. In some embodiments, the weight ratio of the lithium lanthanum zirconium oxide particle and phosphoric acid in the operation 102 is preferably from 0.5:1 to 10:1, for example, 0.5:1, 1:1, 2:1, 3:1, 4:1, 5:1, 6:1, 7:1, 8:1, 9 :1, 10:1 etc., in which a more preferable is from 0.5:1 to 4:1. In some embodiments, mixing the lithium lanthanum zirconium oxide particle and phosphoric acid is performed by using a bead mill machine. In some embodiments, the rotational speed of the bead mill machine is from 100 rpm to 2000 rpm, for example, 100 rpm, 500 rpm, 1000 rpm, 1500 rpm, 2000 rpm, etc. In some embodiments, the same bead mill machine is used directly in the operation 102 after the operation 101. In some embodiments, after the operation 101 forms the lithium lanthanum zirconium oxide particle with the average particle size or the average diameter smaller than 500 nm, the operation 102 is followed directly (i.e., no other operations may between the operation 101 and the operation 102, or the interval time between the operation 101 and the operation 102 is substantially equal to 0). In some embodiments, the performed temperature of the operation 102 is at room temperature, for example, 20 °C to 30 °C, such as 20 °C, 22 °C, 24 °C, 26 °C, 28 °C, 30 °C, etc. In some embodiments, the operation 102 is performed until the reaction endpoint of the acid-base reaction is at pH from 4.5 to 6, for example, 4.5, 5, 5.5, 6, etc., to have a sufficiently high lithium phosphate content and a sufficiently low lithium carbonate content.

In some embodiments, the method 100 further includes mixing the lithium lanthanum zirconium oxide particle covered with the protective layer containing lithium phosphate with a fluorine-containing colloid after the operation 102, in which the fluorine-containing colloid includes a fluorine-containing polyolefin. The detailed characteristics of the fluorine-containing colloid refer to the above and will not be repeated herein. In some embodiments, mixing the lithium lanthanum zirconium oxide particle covered with the protective layer containing lithium phosphate with the fluorine-containing colloid is performed in an organic solvent. In some embodiments, the organic solvent includes N,N-dimethylacetamide.

Next, the composite solid electrolyte and the method of manufacturing the same in the present disclosure are described in detail according to some detailed embodiments. To simplify the description, only some detailed embodiments are provided below, and the scope of the present disclosure is not intended to be limited thereof.

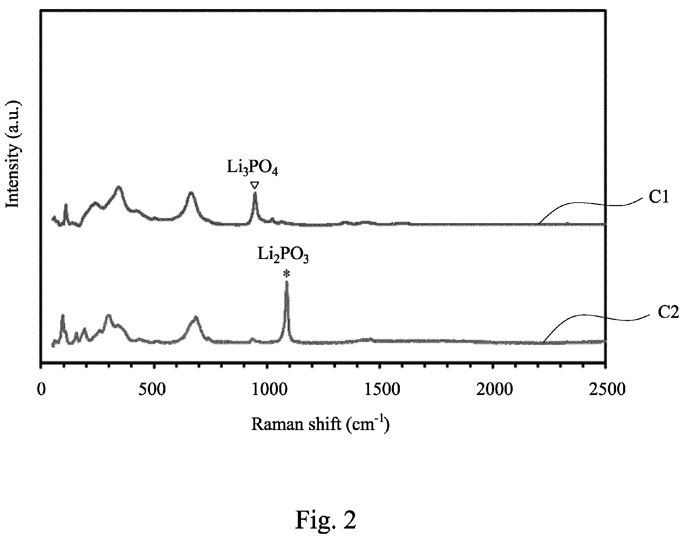

In Fig. 2, line C1 is a Raman spectrum of the composite solid electrolyte according to some embodiments of the present disclosure, and line C2 is a Raman spectrum of a composite solid electrolyte corresponding to that of the present disclosure but excluding the protective layer containing lithium phosphate according to some comparative embodiments. As can be seen from Fig. 2, line C1 has a distinct Raman shift of the lithium phosphate (position marked with ∇ in the figure) and has almost no Raman shift corresponding to the lithium carbonate. Compared to the line C1, line C2 has a significant Raman shift of the lithium carbonate (position marked with * in the figure). It is noted that the comparison plot of the Raman spectra in Fig. 2 compares the lines C1 and C2 by a mathematical normalization method, so the intensity does not include a unit and is indicated in an arbitrary unit.

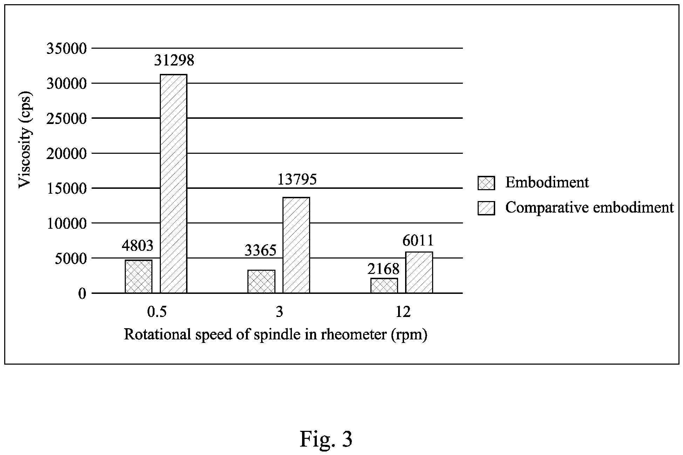

Fig. 3 is a comparative table of the viscosity changing with the rotational speed of the spindle of the rheometer according to some embodiments and some comparative embodiments, in which the embodiments show the viscosity change of the composite solid electrolyte of the present disclosure changing with the rotational speed of the spindle of the rheometer, and the comparative embodiments show the viscosity change of an analog of the composite solid electrolyte corresponding to the present disclosure but excluding the protective layer containing lithium phosphate changing with the rotational speed of the spindle of the rheometer. From the comparison of Fig. 3, since the present disclosure includes the protective layer containing lithium phosphate, the fluorine-containing colloid does not fluoride easily, so the viscosity reduces significantly to simplify implementation in the following operations, such as easy coating and easy coating without heating.

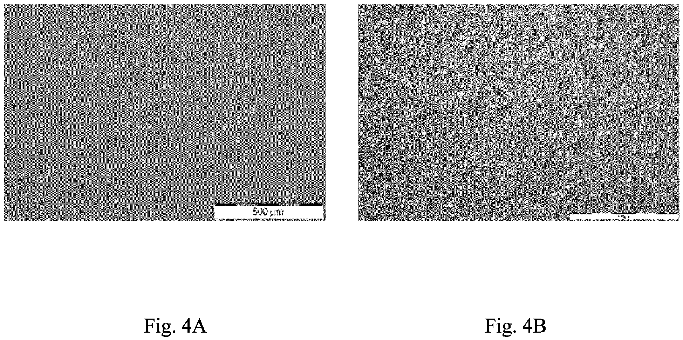

Fig. 4A is an optical microscopic image of a thin film formed by the composite solid electrolyte of the present application according to some embodiments. Fig. 4B is an optical microscopic image of a thin film formed by an analog of the composite solid electrolyte corresponding to the present disclosure but excluding the protective layer containing lithium phosphate according to some comparative embodiments. From the comparison of Fig. 4A and Fig. 4B, the film of the embodiment is smooth and can be applied easily in the subsequent process, while the particles are displayed obviously in that of the comparative embodiments.

The composite solid electrolyte and the method of manufacturing the same in the present disclosure have many advantages. For example, the composite solid electrolytes are based on the solid electrolytes to avoid the shortcomings of the liquid electrolytes which volatilize, leak, and are instability at high temperatures. The composite solid electrolyte further has properties close to liquid and/or colloid by including the protective layer containing lithium phosphate and/or the fluorine-containing colloid to improve the wettability. The composite solid electrolyte has good performance, such as high ion conductivity, high mechanical strength, high stability, low electrical resistance, and so on, and it does not deteriorate after long-term use. The composite solid electrolyte can be applied and operated easily in subsequent operations. The manufacturing method can be implemented easily and is simple and fast.

## Claims

1. A composite solid electrolyte, **characterized by** comprising:
a lithium lanthanum zirconium oxide particle, wherein an average particle size of the lithium lanthanum zirconium oxide particle is smaller than 500 nm and larger than 50 nm; and
a protective layer containing lithium phosphate, **characterized in that** the protective layer containing lithium phosphate covers an outer surface of the lithium lanthanum zirconium oxide particle.

2. The composite solid electrolyte of claim 1, **characterized in that** a weight ratio between the lithium lanthanum zirconium oxide particle and lithium phosphate in the protective layer containing lithium phosphate is from 2:1 to 3:1.

3. The composite solid electrolyte of any one of claims 1 to 2, **characterized in that** a thickness of the protective layer containing lithium phosphate is from 30 nm to 45 nm.

4. The composite solid electrolyte of any one of claims 1 to 3, **characterized by** further comprising a fluorine-containing colloid, wherein the fluorine-containing colloid comprises a fluorine-containing polyolefin, and the lithium lanthanum zirconium oxide particle covered with the protective layer containing lithium phosphate is distributed in the fluorine-containing colloid.

5. The composite solid electrolyte of claim 4, **characterized in that** a viscosity of the fluorine-containing colloid is from 1000 cps to 5000 cps.

6. The composite solid electrolyte of any one of claims 4 to 5, **characterized in that** the fluorine-containing polyolefin comprises polyvinylidene difluoride.

7. The composite solid electrolyte of any one of claims 4 to 6, **characterized in that** a weight ratio between the lithium lanthanum zirconium oxide particle and the fluorine-containing polyolefin is from 30% to 50%.

8. A method (100) of manufacturing composite solid electrolyte, **characterized by** comprising:
grinding a lithium lanthanum zirconium oxide to form a lithium lanthanum zirconium oxide particle (101); and
mixing the lithium lanthanum zirconium oxide particle with phosphoric acid to form a protective layer containing lithium phosphate covering an outer surface of the lithium lanthanum zirconium oxide particle by an acid-base reaction (102).

9. The method (100) of claim 8, **characterized in that** an average particle size of the lithium lanthanum zirconium oxide particle is smaller than 500 nm.

10. The method (100) of any one of claims 8 to 9, **characterized in that** the acid-base reaction comprises reacting the phosphoric acid with lithium carbonate on the outer surface of the lithium lanthanum zirconium oxide particle.

11. The method (100) of any one of claims 8 to 10, **characterized in that** a reaction endpoint of the acid-base reaction is when pH is from 4.5 to 6.

12. The method (100) of any one of claims 8 to 11, **characterized in that** when mixing the lithium lanthanum zirconium oxide particle with the phosphoric acid, a weight ratio between the lithium lanthanum zirconium oxide particle and the phosphoric acid is from 0.5:1 to 10:1.

13. The method (100) of any one of claims 8 to 12, **characterized in that** grinding the lithium lanthanum zirconium oxide comprises using a bead mill machine to perform grinding with a rotational speed from 2000 rpm to 4000 rpm.

14. The method (100) of any one of claims 8 to 13, **characterized in that** mixing the lithium lanthanum zirconium oxide particle with the phosphoric acid comprises using a bead mill machine to perform mixing with a rotational speed from 100 rpm to 2000 rpm.

15. The method (100) of any one of claims 8 to 14, **characterized by** further comprising mixing the lithium lanthanum zirconium oxide particle covered with the protective layer containing lithium phosphate with a fluorine-containing colloid, wherein the fluorine-containing colloid comprises a fluorine-containing polyolefin.
